# FASCICULE DE BREVET EUROPEEN

(11) **EP 4 409 182 B1**
(45) Date de publication et mention de la délivrance du brevet: **10.09.2025**
(21) Numéro de dépôt: 22793760.4
(22) Date de dépôt: 29.09.2022
(51) Int. Cl.: F16L 21/03, F16J 15/02, F16J 15/32

(54) **JOINT D'ETANCHEITE TORIQUE ET RACCORD FLUIDIQUE POUR CIRCUIT DE TRANSFERT DE FLUIDE COMPRENANT UN TEL JOINT**
O-RING-DICHTUNG UND FLUIDVERBINDUNG FÜR EINEN FLÜSSIGKEITSÜBERTRAGUNGSKREISLAUF MIT EINER SOLCHEN DICHTUNG
O-RING SEAL AND FLUID CONNECTION FOR A FLUID TRANSFER CIRCUIT COMPRISING SUCH A SEAL

(30) Priorité: 01.10.2021 FR 2110397
(43) Date de publication de la demande: 07.08.2024
(73) Titulaire: Akwel Sweden AB, 43215 Varberg (SE)
(72) Inventeur: OLOFSSON, Jan, 43238 Varberg (SE); LOFGREN, Cécilia, 43295 Varberg (SE)
(74) Mandataire: Cabinet Netter
(86) Numéro de dépôt international: PCT/EP2022/077128
(87) Numéro de publication internationale: WO 2023/052514

(56) Documents cités:
- WO-A1-2018/236731
- US-A1- 2008 217 912
- US-A1- 2016 084 381

## Description

### Domaine technique.

La présente invention concerne le domaine technique du transport de fluide tel que l'air ou l'eau, notamment dans un circuit de transfert de fluide. Elle s'applique plus particulièrement mais non exclusivement au transfert de fluide dans un circuit carburant, un circuit d'air ou de vide, un circuit vapeur ou bien un circuit de refroidissement d'un moteur, d'une batterie pour un véhicule électrique ou hybride, d'électroniques de puissance ou autres, par exemple au moyen d'un échangeur thermique. L'invention concerne plus particulièrement un joint d'étanchéité torique et un raccord fluidique pour transfert de fluide d'un tel circuit de transfert de fluide comprenant le joint d'étanchéité.

En général, un tel raccord fluidique comprend un connecteur femelle et un connecteur mâle présentant des formes complémentaires interne et externe leur permettant de coopérer par emmanchement. Ainsi, le connecteur femelle comprend un orifice récepteur configuré pour recevoir par complémentarité de forme un embout d'extrémité du connecteur mâle. Par ailleurs, un verrouillage de l'embout du connecteur mâle et du connecteur femelle peut être réalisé par des éléments de fixation rapide, tels que des clips, des pattes d'encliquetage et/ou des agrafes de fixation.

Afin d'assurer l'étanchéité au fluide de ce raccord à couplage rapide, il est classique de prévoir une garniture d'étanchéité annulaire, par exemple un joint d'étanchéité torique. Ce joint assure ainsi l'étanchéité au fluide entre le connecteur mâle et le connecteur femelle du raccord fluidique.

Dans ce cas, afin de réaliser l'étanchéité de cette interface, au moins un des embouts est muni généralement d'une rainure ou d'une gorge annulaire conformée pour recevoir le joint annulaire d'étanchéité. Afin de générer l'effet d'étanchéité, le joint est compressé, lors de l'emmanchement entre la paroi interne de l'orifice récepteur femelle et la paroi externe de l'embout d'insertion mâle.

Or, lors de l'emmanchement, le joint annulaire, en formant un renflement annulaire, génère un surplus d'effort d'insertion. Cet effort d'insertion peut atteindre un niveau tel qu'un montage manuel s'avère parfois très fastidieux et peut ainsi occasionner une perte de temps relativement importante lors des opérations de montage de tels raccords fluidiques.

L'invention a notamment pour but de proposer une solution qui permette de réduire l'effort d'insertion tout en garantissant un effet d'étanchéité sécuritaire.

### Technique antérieure.

On connaît déjà de l'art antérieur le document US 2008/0217912 A1 qui décrit un raccord fluidique comprenant un connecteur femelle et un embout mâle destiné à être emmanché à l'intérieur d'un orifice récepteur du connecteur femelle. Le connecteur femelle présente sur une paroi interne de son orifice récepteur un épaulement périphérique délimitant un siège de réception d'une garniture d'étanchéité. Cette surface de réception a une forme générale ondulée selon la direction circonférentielle et est conformée ainsi pour recevoir une garniture d'étanchéité également ondulée.

Avec cette configuration spécifique, les efforts d'insertion de l'embout mâle à l'intérieur du récepteur femelle sont réduits. Dans cet art antérieur connu, la présence de la garniture d'étanchéité peut toutefois encore générer un surplus d'effort de l'emmanchement des deux connecteurs mâle et femelle entre eux lors du passage des crêtes d'ondulation. L'invention a notamment pour but de proposer de réduire encore les efforts d'insertion sans générer de surcoût important. Un anneau d'étanchéité à double courbure est en outre connu de US 2016/084381 A1.

### Résumé de l'invention

A cet effet, l'invention a pour objet un joint d'étanchéité torique pour un raccord fluidique d' axe principal d'insertion, du type comprenant un profil ondulé selon une trajectoire circonférentielle centrée autour de l'axe qui présente une amplitude axiale variable par rapport à un plan transverse de référence perpendiculaire à l'axe principal entre deux plans transverses inférieur et supérieur et configuré pour définir un profil géométrique non plan du joint d'étanchéité, le profil ondulé présentant au moins deux crêtes de sommets et au moins deux crêtes de creux formées par des excursions axiales par rapport au plan transverse de référence, **caractérisé en ce qu**'au moins un sommet et un creux sont situés sur les plans respectivement supérieur et inférieur et au moins les autres des sommets et creux sont situés chacun sur un plan transversal intermédiaire, les plans intermédiaires étant décalés axialement l'un de l'autre et situés axialement strictement entre les deux plans supérieur et inférieur de telle sorte que la compression du joint d'étanchéité suit un profil en gradin qui présente des marches définies par chacun des plans supérieur, intermédiaires et inférieur.

Grâce à l'invention, les efforts d'emmanchement ou d'insertion sont réduits. La réduction des efforts d'insertion est obtenue par une modification de la géométrie du joint torique d'étanchéité de telle sorte que la compression du joint d'étanchéité se produit graduellement lors de l'insertion axiale ce qui réduit les efforts d'insertion instantanés.

Un joint d'étanchéité selon l'invention peut en outre comporter l'une ou plusieurs des caractéristiques énoncées ci-après.

Dans un mode de réalisation préféré de l'invention, des portions du joint reliant les crêtes sont curvilignes.

Dans un mode de réalisation préféré de l'invention, les crêtes de sommets et/ou les crêtes de creux s'étendent chacune en vis-à-vis l'une de l'autre.

L'invention a encore pour objet un raccord fluidique qui peut en outre comporter l'une ou plusieurs des caractéristiques suivantes.

Dans un mode de réalisation préféré de l'invention, les connecteurs présentent des formes complémentaires d'engagement mutuel délimitant à l'état emmanché une cavité annulaire interne de logement du joint d'étanchéité.

Dans un mode de réalisation préféré de l'invention, le connecteur femelle comprend un épaulement périphérique délimitant intérieurement une surface radiale formant un siège annulaire d'étanchéité configurée pour recevoir le joint torique d'étanchéité.

Dans un mode de réalisation préféré de l'invention, le connecteur femelle comprend une bague de maintien insérée dans le corps principal du côté de l'extrémité de raccordement pour définir une gorge annulaire, étant ouverte radialement vers l'intérieur et n'étant pas contenue dans un plan transverse de réception du joint d'étanchéité torique.

Dans un mode de réalisation préféré de l'invention, le joint est radialement compressé à l'intérieur de la gorge annulaire par le connecteur mâle après insertion dans le connecteur femelle.

Dans un mode de réalisation préféré de l'invention, le connecteur femelle comprend des fentes selon une direction circonférentielle et comprend en outre un cavalier engagé dans les fentes pour retenir le connecteur mâle à l'intérieur du corps du connecteur femelle.

Dans un mode de réalisation préféré de l'invention, les connecteurs mâle et femelle sont réalisés dans une matière plastique ou dans une matière métallique.

### Brève description des dessins

D'autres caractéristiques et avantages de l'invention apparaîtront à la lumière de la description qui suit, faite en référence aux dessins annexes dans lesquels :
**Fig.1**

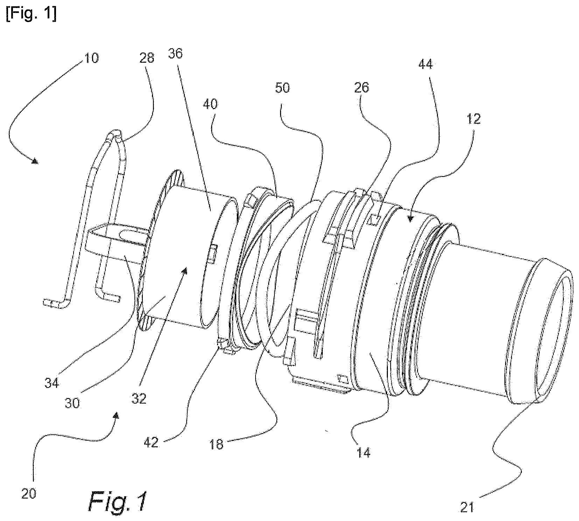

   [fig.1] représente une vue éclatée d'un raccord fluidique comprenant un joint d'étanchéité conforme à l'invention dans lequel le connecteur mâle est un capuchon de transport provisoire ;
**Fig.2**

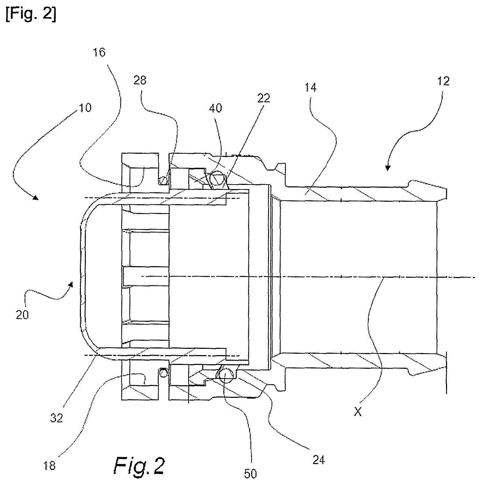

   [fig.2] représente une vue en coupe du raccord fluidique de la figure 1 à l'état assemblé ;
**Fig.3**

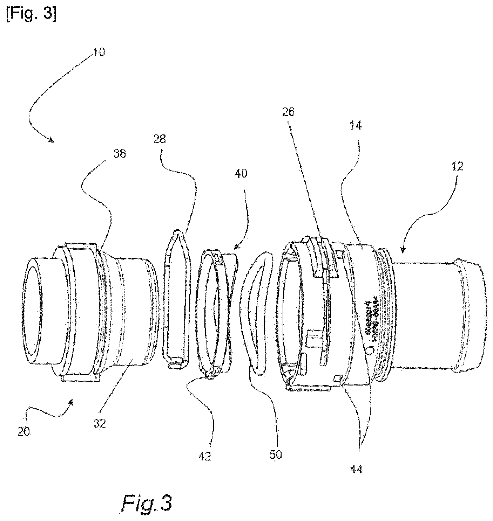

   [fig.3] représente une vue éclatée d'un raccord fluidique comprenant un joint d'étanchéité conforme à l'invention dans lequel le connecteur mâle est un embout de raccordement mâle ;
**Fig.4**

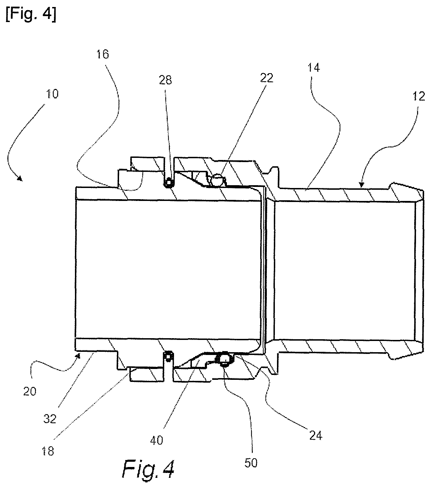

   [fig.4] représente une vue en coupe du raccord fluidique de la figure 3 à l'état assemblé ;
**Fig.5**

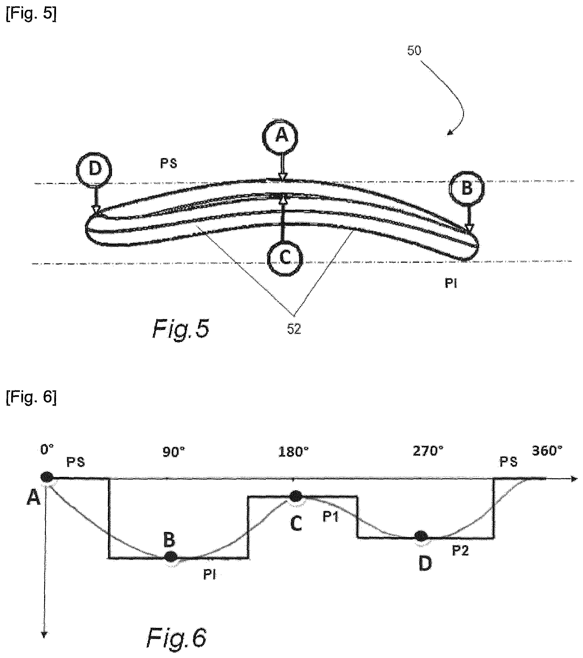

   [fig.5] représente une vue détaillée en perspective du joint d'étanchéité de la figure 1 ;
**Fig.6**
   [fig.6] représente un exemple particulier du déroulé sur 360° de la variation de l'amplitude axiale du joint d'étanchéité de la figure 5 par rapport à un plan transverse de référence.

### Description des modes de réalisation

On a représenté sur les figures 1 à 6 un raccord fluidique selon l'invention. Ce raccord fluidique porte la référence générale 10. Ce raccord fluidique 10 comprend un connecteur femelle 12 et un connecteur mâle 20 décrits ci-après en détail.

En particulier, un tel raccord fluidique 10 peut appartenir à un circuit de transport d'un fluide, tel qu'un fluide de refroidissement d'un moteur ou d'une batterie d'un véhicule automobile. Par exemple, il est destiné à l'assemblage rapide d'un premier élément tubulaire fluidique tel qu'une tubulure à gorge ou collerette annulaire à un second élément de conduit fluidique tel qu'un tuyau flexible (non représenté sur les figures) destiné à être raccordé par exemple par emboîtement sur le raccord fluidique 10. Le tuyau flexible est par exemple réalisé dans un matériau élastomère, tel que du caoutchouc.

Par exemple, en référence aux figures 1 et 2, le connecteur femelle 12 du raccord fluidique 10 est représenté de façon détaillée. En général, le connecteur femelle 12 peut inclure un corps principal 14 de forme générale tubulaire ayant un passage axial 16 s'étendant longitudinalement au travers du corps 14. Une première extrémité de raccordement 18 du passage 16 (ou orifice récepteur 18) peut être dimensionnée pour recevoir de façon coulissante une extrémité 36 tubulaire d'embout du connecteur mâle 20 (décrit ci-dessous). Le corps tubulaire 14 définit un axe principal d'insertion X le long duquel le connecteur mâle 20 peut être inséré. De préférence, d'un autre côté 21, le composant femelle 12 est pourvu d'une autre extrémité pour une connexion à un second conduit de transport de fluide tel qu'un tuyau flexible (non représenté sur les figures).

De préférence, le corps 14 peut inclure une gorge radiale 22 formée à l'intérieur du corps 14 sur une paroi interne du passage 16 qui est distante intérieurement de l'extrémité de raccordement 18 du corps 14. La gorge 22 peut avoir une variété de profils de section (par exemple, arrondi, carré, rectangulaire, trapézoïdale, polygonal, etc.) et peut généralement être formée de façon continue autour de la circonférence intérieure dudit passage 16.

Dans cet exemple, le connecteur mâle 20 comprend encore un corps 30 pourvu d'une extrémité mâle d'insertion 36 ayant une forme complémentaire de l'extrémité de raccordement femelle 18 pour permettre un engagement par emmanchement le long de l'axe principal d'insertion X à l'intérieur du passage 16 du connecteur femelle 12. Dans l'exemple illustré sur la figure 1 ou sur la figure 2, le composant mâle 20 a une forme générale tubulaire fermée à une extrémité pour former un capuchon ou bouchon de transport 32 provisoire pourvu d'une anse de préhension 34.

Dans l'exemple illustré sur les figures 3 et 4, le connecteur mâle 20 est un embout de raccordement mâle. Sur ces figures, le corps 30 de l'embout mâle 20 comprend encore une rainure circonférentielle 38 et le corps principal 14 du connecteur femelle 12 comprend des fentes 26 s'étendant selon une direction circonférentielle au corps principal 14. Le raccord fluidique 10 comprend en outre un clip 28 prévu pour être engagé en cavalier à l'intérieur des rainures 26 du connecteur femelle 12 afin de coopérer avec la rainure circonférentielle 38 et ainsi retenir le connecteur mâle 20 à l'intérieur du passage 16 du connecteur femelle 12.

Selon l'invention, le raccord fluidique 10 comprend encore un joint d'étanchéité torique 50. Le joint d'étanchéité torique 50 peut être partiellement disposé à l'intérieur de la gorge 22. Comme décrit en détail ci-après, le joint d'étanchéité 50 peut être dimensionné pour s'engager de façon étanche autour du connecteur mâle 20 lorsque ce dernier est reçu à l'intérieur du passage 16. Le joint d'étanchéité 50 peut être formé à partir de n'importe quel matériau adapté, par exemple du caoutchouc vulcanisé, du silicone, un matériau élastique synthétique et/ou élastique, etc.

Dans le mode de réalisation préféré de l'invention, le joint d'étanchéité 50 est porté par le connecteur femelle 12. Dans ce cas, le joint 50 est, par exemple, annulaire ou torique et est inséré à l'intérieur du passage 16 dans la gorge annulaire 22 fournie dans ce but.

Dans le mode de réalisation préféré de l'invention, le connecteur mâle 20 présente une surface d'engagement circonférentielle configurée pour venir en engagement serré contre le joint 50, lorsque le connecteur mâle 20 est inséré à l'intérieur du passage axial 16 du connecteur femelle 12.

Par exemple, les connecteurs mâle 20 et femelle 12 ont des formes complémentaires d'engagement mutuel délimitant dans l'état inséré une cavité annulaire fermée pour loger le joint 50, définie par la gorge annulaire 22 fermée par la surface d'engagement circonférentiel du connecteur mâle 20.

De préférence, le connecteur femelle 12 comprend encore un épaulement interne périphérique 24 délimitant une surface radiale formant un siège annulaire d'étanchéité, configuré pour former une des parois latérales de la gorge annulaire 22.

Comme cela apparaît clairement sur la vue en coupe du raccord fluidique 10 représentée sur la figure 4, le joint d'étanchéité 50 est radialement compressé à l'intérieur de la gorge annulaire 22 du connecteur mâle 20 après son insertion à l'intérieur du connecteur femelle 12.

Dans le mode de réalisation préféré de l'invention, le connecteur femelle 12 inclut une bague de maintien 40 qui est insérée du côté de l'extrémité de raccordement 18 du corps 14 du connecteur femelle 12. Cette bague de maintien 40 présente un diamètre extérieur qui est ajusté au diamètre intérieur de l'extrémité de raccordement 18 du corps 14 de telle sorte que la bague de maintien 40 peut être insérée à l'intérieur du corps 14 du connecteur femelle 12. En outre, de préférence, la bague de maintien 40 présente sur sa surface externe des ergots 42 d'encliquetage coopérant avec des ouvertures 44 du connecteur femelle 12 afin de positionner et retenir la bague 40 à l'intérieur du connecteur femelle 12.

En outre, comme cela est visible sur la figure 4, la face d'extrémité d'insertion de la bague de maintien 40 à l'intérieur du connecteur femelle 12 forme une paroi latérale de la gorge 22 du connecteur femelle 12. On notera de préférence que la gorge 22 n'est pas contenue dans un plan transverse, perpendiculaire à l'axe principal d'insertion X.

Grâce à la bague de maintien 40 qui vient former radialement une paroi de la gorge 22, le joint d'étanchéité 50 est retenu dans le corps principal 14 du connecteur femelle 12 entre la bague de maintien 40 et l'épaulement intérieur du connecteur femelle 12.

Selon l'invention, plus spécifiquement, le joint d'étanchéité 50 comprend un profil ondulé le long d'un trajet circonférentiel centré autour de l'axe X qui a une amplitude axiale variable par rapport à un plan de référence transverse (non représenté) perpendiculaire à l'axe principal X entre des plans transverses inférieur PI et supérieur PS.

Comme cela est illustré en figure 5, le profil ondulé du joint d'étanchéité 50 présente une pluralité d'ondulations et comprend au moins deux crêtes de sommets (A, C) et au moins deux crêtes de creux (B, D) formées par des excursions axiales par rapport au plan transverse de référence.

Comme cela est illustré très schématiquement sur la figure 6, au moins une crête de sommet (A) et au moins une crête de creux (B) sont disposées chacune respectivement sur le plan transverse supérieur PS et sur le plan transverse inférieur PI et au moins une crête de sommet (C) et au moins une crête de creux (D) sont localisés chacune sur des plans transverses intermédiaires P1 et P2. En particulier, les plans intermédiaires P1 et P2 sont axialement décalés l'un de l'autre et sont localisés axialement strictement entre le plan inférieur PI et le plan supérieur PS.

Grâce à cette configuration, la compression du joint d'étanchéité 50 suit un profil en marche d'escalier qui a des marches définies par chacun des plans inférieur PI, supérieur PS et intermédiaires P1 et P2 au cours de l'insertion axiale des deux connecteurs mâle 20 et femelle 12 du raccord fluidique 10 (figure 6). De préférence, des portions de connexion 52 du joint 50 s'étendant entre les crêtes de sommets et les crêtes de creux sont curvilignes. En outre, les crêtes de sommet A, C (et/ou les crêtes de creux B, D) s'étendent de façon diamétralement opposée les unes par rapport aux autres.

Par exemple, lors de l'emmanchement, un premier 12 des connecteurs est configuré pour porter le joint d'étanchéité 50 et un deuxième 20 des connecteurs présente une surface d'engagement circonférentielle configurée pour venir en engagement serré contre le joint 50.

De préférence, le connecteur mâle et/ou femelle est réalisé dans une matière plastique, par exemple par moulage plastique. Toutefois, dans une variante de l'invention, le connecteur mâle et/ou le connecteur femelle est réalisé dans un matériau métallique.

La pression d'appui exercée contre le joint 50 lors de l'emmanchement du connecteur mâle 20 à l'intérieur du connecteur femelle 12 permet ainsi de garantir une liaison d'étanchéité efficace entre les deux connecteurs 12, 20.

On va maintenant décrire les principaux aspects de l'invention en référence aux deux modes de réalisation précédemment décrits et illustrés sur les figures 1à 6.

Initialement, le joint d'étanchéité 50 est monté sur un des connecteurs mâle 20 ou femelle 12. Dans le mode de réalisation préféré de l'invention, le joint d'étanchéité 50 est monté à l'intérieur de la gorge annulaire 22 du connecteur femelle 12, délimitée axialement par un épaulement périphérique interne 24 formé dans la surface interne du connecteur femelle 12 et par une face d'extrémité de la bague de maintien 40.

Ensuite, dans un second temps, l'extrémité d'insertion 36 du connecteur mâle 20 est insérée dans l'extrémité de raccordement du connecteur femelle 12. Pendant cette insertion, la surface d'engagement du connecteur mâle 20 déforme radialement le joint 50 afin de pouvoir surmonter le relief créé par le joint d'étanchéité 50.

Comme le joint d'étanchéité 50 est non plan mais au contraire pourvu d'ondulations selon le profil très spécifique défini par l'invention, la pression exercée par la surface d'engagement du connecteur mâle 20 sur le joint d'étanchéité 50 est graduelle ce qui facilite l'insertion instantanée du connecteur mâle 20 à l'intérieur du passage axial 16 du connecteur femelle 12.

La pression d'appui graduelle exercée par la surface d'engagement du connecteur mâle 20 sur le joint 50 permet de réduire l'effort d'insertion ou d'introduction instantané de l'embout mâle 20 à l'intérieur de l'embout femelle 12, en comprimant d'abord un côté, puis le côté opposé et ensuite les côtés gauche et droit, un par un. Par conséquent, le profil de l'intensité de la force d'insertion apparaît suivre un escalier très progressif sans provoquer de surplus d'effort à l'insertion.

Bien entendu, l'invention ne se limite pas aux modes de réalisation précédemment décrits. D'autres modes de réalisation à la portée de l'homme du métier peuvent aussi être envisagés sans sortir du cadre de l'invention définie par les revendications ci-après.

## Revendications

1. Joint d'étanchéité torique (50) pour un raccord fluidique (10) d' axe principal d'insertion (X), du type comprenant un profil ondulé selon une trajectoire circonférentielle centrée autour de l'axe (X) qui présente une amplitude axiale variable par rapport à un plan transverse de référence perpendiculaire à l'axe principal (X) entre deux plans transverses inférieur (PI) et supérieur (PS) et configuré pour définir un profil géométrique non plan du joint d'étanchéité (50), le profil ondulé présentant au moins deux crêtes de sommets (A, C) et au moins deux crêtes de creux (B, D) formées par des excursions axiales par rapport au plan transverse de référence, **caractérisé en ce qu'**au moins un sommet (A, C) et un creux (B, D) sont situés sur les plans respectivement supérieur (PS) et inférieur (PI) et au moins les autres des sommets (A, C) et creux (B, D) sont situés chacun sur un plan transversal intermédiaire (P1, P2), les plans intermédiaires (P1, P2) étant décalés axialement l'un de l'autre et situés axialement strictement entre les deux plans supérieur (PS) et inférieur (PI) de telle sorte que la compression du joint d'étanchéité (50) suit un profil en gradin qui présente des marches définies par chacun des plans supérieur (PS), intermédiaires (P1, P2) et inférieur (PI).

2. Joint d'étanchéité (50) selon la revendication précédente, dans lequel des portions (52) du joint (50) reliant les crêtes sont curvilignes.

3. Joint d'étanchéité (50) selon l'une quelconque des revendications précédentes, dans lequel les crêtes de sommets (A, C) et/ou les crêtes de creux (B, D) s'étendent chacune en vis-à-vis l'une de l'autre.

4. Raccord fluidique (10) pour circuit de fluide, du type comprenant :
- un connecteur femelle (12) comprenant un corps principal (14) muni d'un orifice récepteur femelle (18) d'axe principal d'insertion (X),
- un connecteur mâle (20) comprenant un corps principal (30) muni d'un embout d'insertion mâle (34) présentant une forme complémentaire de l'orifice récepteur femelle (18) pour coopérer par emmanchement selon l'axe d'insertion principal (X),
- un joint d'étanchéité torique (50) destiné à assurer une étanchéité au fluide entre les connecteurs (12, 20),
et dans lequel, lors de l'emmanchement, un premier (20, 12) des connecteurs (12, 20) est configuré pour porter le joint d'étanchéité (50) et un deuxième (12, 20) des connecteurs (12, 20) présente une surface d'engagement circonférentielle configurée pour venir en engagement serré contre le joint (50), **caractérisé en ce que** le joint d'étanchéité (50) est selon l'une quelconque des revendications précédentes.

5. Raccord (10) selon la revendication précédente, dans lequel les connecteurs (12, 20) présentent des formes complémentaires d'engagement mutuel délimitant à l'état emmanché une cavité annulaire interne de logement du joint d'étanchéité (50).

6. Raccord (10) selon l'une quelconque des revendications 4 ou 5, dans lequel le connecteur femelle (12) comprend un épaulement périphérique (24) délimitant intérieurement une surface radiale formant un siège annulaire d'étanchéité configurée pour recevoir le joint torique d'étanchéité (50).

7. Raccord (10) selon l'une quelconque des revendications 4 à 6, dans lequel le connecteur femelle (12) comprend une bague de maintien (40) insérée dans le corps principal (14) du côté de l'extrémité de raccordement (18) pour définir une gorge annulaire (22), étant ouverte radialement vers l'intérieur et n'étant pas contenue dans un plan transverse de réception du joint d'étanchéité torique (50).

8. Raccord (10) selon l'une quelconque des revendications 5 à 7, dans lequel le joint (50) est radialement compressé à l'intérieur de la gorge annulaire (22) par le connecteur mâle (20) après insertion dans le connecteur femelle (12).

9. Raccord (10) selon la revendication précédente, dans lequel le connecteur femelle (12) comprend des fentes (26) selon une direction circonférentielle et comprend en outre un cavalier (28) engagé dans les fentes (26) pour retenir le connecteur mâle (20) à l'intérieur du corps (14) du connecteur femelle (12).

10. Raccord (10) selon l'une quelconque des revendications 4 à 9, dans lequel les connecteurs mâle (20) et femelle (12) sont réalisés dans une matière plastique ou dans une matière métallique.

## Patentansprüche

1. O-Ring-Dichtung (50) für einen Fluidanschluss (10) mit einer Haupteinführachse (X), von der Art, umfassend ein Wellenprofil entlang einer um die Achse (X) zentrierten Umfangsbahn, das eine variable axiale Amplitude in Bezug auf eine zur Hauptachse (X) senkrechte Referenzquerebene zwischen zwei unteren (PI) und oberen (PS) Querebenen aufweist und so eingerichtet ist, dass es ein nicht-planares geometrisches Profil der Dichtung (50) definiert, wobei das Wellenprofil mindestens zwei Scheitelpunkte (A, C) und mindestens zwei Talpunkte (B, D) aufweist, die durch axiale Auslenkungen in Bezug auf die Referenzquerebene gebildet werden, **dadurch gekennzeichnet, dass** mindestens ein Scheitelpunkt (A, C) und ein Talpunkt (B, D) auf der oberen (PS) beziehungsweise unteren (PI) Ebene liegen und mindestens die anderen der Scheitelpunkte (A, C) und Talpunkte (B, D) jeweils auf einer transversalen Zwischenebene (P1, P2) liegen, wobei die Zwischenebenen (P1, P2) axial gegeneinander versetzt sind und axial streng zwischen den beiden oberen (PS) und unteren (PI) Ebenen liegen, so dass die Kompression der Dichtung (50) einem Stufenprofil folgt, das Stufen aufweist, die durch jede der oberen (PS), mittleren (P1, P2) und unteren (PI) Ebenen definiert sind.

2. Dichtung (50) nach dem vorhergehenden Anspruch, wobei Abschnitte (52) der Dichtung (50), die die Punkte verbinden, kurvenförmig sind.

3. Dichtung (50) nach einem der vorhergehenden Ansprüche, wobei sich die Scheitelpunkte (A, C) und/oder die Talpunkte (B, D) jeweils einander gegenüberliegend erstrecken.

4. Fluidanschluss (10) für einen Fluidkreislauf, des Typs, der umfasst:
- einen Buchsenverbinder (12), umfassend einen Hauptkörper (14) mit einer Buchsen-Aufnahmeöffnung (18) für die Haupteinführachse (X),
- einen Steckverbinder (20), umfassend einen Hauptkörper (30), der mit einer Steck-Einführspitze (34) ausgestattet ist, die eine ergänzende Form der Buchsen-Aufnahmeöffnung (18) aufweist, um durch Aufstecken entlang der Haupteinführachse (x) zusammenzuarbeiten,
- eine O-Ring-Dichtung (50), die dazu bestimmt ist, eine Fluidabdichtung zwischen den Verbindern (12, 20) zu gewährleisten,
und wobei beim Einpressen ein erster (20, 12) der Verbinder (12, 20) so eingerichtet ist, dass er die Dichtung (50) trägt, und ein zweiter (12, 20) der Verbinder (12, 20) eine umlaufende Eingriffsfläche aufweist, die so eingerichtet ist, dass sie in einen engen Eingriff mit der Dichtung (50) kommt, **dadurch gekennzeichnet, dass** die Dichtung (50) nach einem der vorhergehenden Ansprüche ist.

5. Anschluss (10) nach dem vorhergehenden Anspruch, wobei die Verbinder (12, 20) ergänzende Formen des gegenseitigen Einrastens aufweisen, die im eingepressten Zustand einen inneren Ringhohlraum zur Aufnahme der Dichtung (50) begrenzen.

6. Anschluss (10) nach einem der Ansprüche 4 oder 5, wobei der Buchsenverbinder (12) eine Umfangsschulter (24) umfasst, die innen eine radiale Oberfläche begrenzt, die einen Dichtungsringsitz bildet, der so eingerichtet ist, dass er die O-Ring-Dichtung (50) aufnimmt.

7. Anschluss (10) nach einem der Ansprüche 4 bis 6, wobei der Buchsenverbinder (12) einen Haltering (40) umfasst, der in den Hauptkörper (14) auf der Seite des Anschlussendes (18) eingeführt ist, um eine Ringnut (22) zu definieren, die radial nach innen geöffnet ist und nicht in einer Querebene zur Aufnahme der O-Ring-Dichtung (50) enthalten ist.

8. Anschluss (10) nach einem der Ansprüche 5 bis 7, wobei die Dichtung (50) nach dem Einführen in den Buchsenverbinder (12) durch den Steckverbinder (20) innerhalb der Ringnut (22) radial komprimiert wird.

9. Anschluss (10) nach dem vorhergehenden Anspruch, wobei der Buchsenverbinder (12) Schlitze (26) in einer Umfangsrichtung umfasst und ferner einen Jumper (28) umfasst, der in die Schlitze (26) eingesetzt ist, um den Steckverbinder (20) innerhalb des Körpers (14) des Buchsenverbinders (12) zu halten.

10. Anschluss (10) nach einem der Ansprüche 4 bis 9, wobei der Steckverbinder (20) und der Buchsenverbinder (12) aus einem Kunststoffmaterial oder aus einem Metallmaterial hergestellt sind.

## Claims

1. O-ring seal (50) for a fluid connection (10) with a main insertion axis (X), of the type comprising an undulating profile following a circumferential path centred on the axis (X) which has a variable axial amplitude relative to a reference transverse plane perpendicular to the main axis (X) between two, lower (PI) and upper (PS), transverse planes and designed to define a non-planar geometric profile of the seal (50), the undulating profile having at least two peak crests (A, C) and at least two trough crests (B, D) that are formed by axial excursions relative to the reference transverse plane, **characterized in that** at least one peak (A, C) and one trough (B, D) are located on the upper (PS) and lower (PI) planes respectively and at least the other of the peaks (A, C) and troughs (B, D) are each located on an intermediate transverse plane (P1, P2), the intermediate planes (P1, P2) being axially offset from one another and located axially strictly between the two upper (PS) and lower (PI) planes in such a way that the compression of the seal (50) follows a stepped profile with steps defined by each of the upper (PS), intermediate (P1, P2) and lower (PI) planes.

2. Seal (50) according to the preceding claim, wherein portions (52) of the seal (50) connecting the crests are curvilinear.

3. Seal (50) according to one of the preceding claims, wherein the peak crests (A, C) and/or the trough crests (B, D) each extend facing one another.

4. Fluid connection (10) for a fluid circuit, of the type comprising:
- a female connector (12) comprising a main body (14) provided with a female receiving orifice (18) with a main insertion axis (X),
- a male connector (20) comprising a main body (30) provided with a male insertion end piece (34) having a shape complementary to the female receiving orifice (18) in order to cooperate by fitting together along the main insertion axis (X),
- an O-ring seal (50) designed to provide a fluid-tightness between the connectors (12, 20),
and wherein, upon fitting, a first (20, 12) of the connectors (12, 20) is designed to carry the seal (50) and a second (12, 20) of the connectors (12, 20) has a circumferential engagement surface designed to tightly engage against the seal (50), **characterized in that** the seal (50) is according to one of the preceding claims.

5. Connection (10) according to the preceding claim, wherein the connectors (12, 20) have complementary shapes of mutual engagement delimiting, in the fitted state, an internal annular cavity for housing the seal (50).

6. Connection (10) according to any one of claims 4 to 5, wherein the female connector (12) comprises a peripheral shoulder (24) internally delimiting a radial surface forming an annular sealing seat designed to receive the O-ring seal (50).

7. Connection (10) according to any one of claims 4 to 6, wherein the female connector (12) comprises a retaining ring (40) inserted into the main body (14) on the side of the connection end (18) to define an annular groove (22), being open radially inwards and not being contained in a transverse plane for receiving the O-ring seal (50).

8. Connection (10) according to any one of claims 5 to 7, wherein the seal (50) is radially compressed inside the annular groove (22) by the male connector (20) after it has been inserted into the female connector (12) .

9. Connection (10) according to the preceding claim, wherein the female connector (12) comprises slots (26) in a circumferential direction and also comprises a jumper (28) engaged in the slots (26) to retain the male connector (20) inside the body (14) of the female connector (12).

10. Connection (10) according to any one of claims 4 to 9, wherein the male (20) and female (12) connectors are made from a plastic material or metallic material.
